# EUROPEAN PATENT SPECIFICATION

(11) **EP 2 088 702 B1**
(45) Date of publication and mention of the grant of the patent: **14.05.2014**
(21) Application number: 08290145.5
(22) Date of filing: 11.02.2008
(51) Int. Cl.: H04J 3/16, H04J 7/00

(54) **Clock recovery for a multi-speed multi-level signal**
Taktwiederherstellung für ein Signal mit mehreren Geschwindigkeiten und mehreren Ebenen
Récupération d'horloge pour signal multi-niveau à plusieurs vitesses

(43) Date of publication of application: 12.08.2009
(73) Proprietor: Alcatel Lucent, 75007 Paris (FR)
(72) Inventor: Krimmel, Heinz Georg, 70825 Korntal-Münchingen (DE); Pöhlmann, Wolfgang, 71282 Hemmingen (DE)
(74) Representative: Wetzel, Emmanuelle

(56) References cited:
- EP-A- 1 420 532
- DE-A1- 3 525 105
- US-A- 4 972 408

## Description

### Background of the Invention

The invention relates to an optical network termination for receiving a multi-speed, multi-level signal comprising a first discrete-level signal having a first speed and a second discrete-level signal having a second speed, the second speed being an integer multiple of the first speed, the optical network termination comprising: a clock recovery circuit adapted to recover the clock of the second discrete-level signal from the multi-speed, multi-level signal, as well as to a passive optical network comprising at least one such optical network termination. The invention further relates to a method for receiving a multi-speed, multi-level signal and a computer program product for performing the method.

A receiver comprising a clock recovery circuit as described above is known from US 4,972,408.

Passive optical networks are optical distribution networks for exchanging signals between a central station, commonly referred to as Optical Line Termination, OLT, and a plurality of subscriber stations, usually referred to as Optical Network Terminations, ONTs or Optical Network Units, ONUs. Upgrading such a distribution network by increasing the speed of the downstream transmission from the OLT to the ONTs from a first bit rate (e.g. 2.5 Gbit/s) to a second speed with a higher bit rate (e.g. 10 Gbit/s) is rather difficult, the reason being as follows: Although the network operator can easily replace a legacy OLT which is not capable of performing downstream transmission at the higher bit rate by an advanced OLT, not all of the legacy ONTs which are incapable of processing signals with the higher bit rate can be replaced at the same time due to economical reasons, as several tens to hundreds of ONTs may be connected to the same OLT.

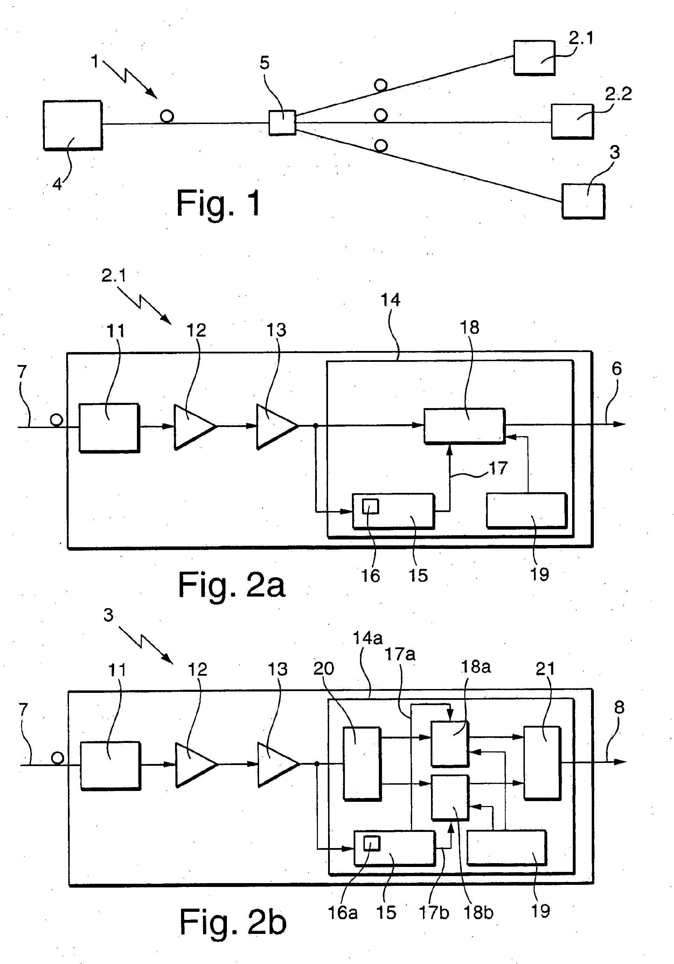

Therefore, a considerable number of legacy ONTs **2.1**, **2.2** may be present together with some updated or advanced ONTs **3** in a PON 1 after such a network upgrade (see **Fig. 1**). An OLT **4** of the PON 1 which is connected to both types of optical network terminations 2.1, 2.2, 3 via a passive splitter **5** must then be adapted to transmit downstream signals which can be received and processed by the legacy ONTs 2.1, 2.2 and the advanced ONTs 3. This can be achieved either by dividing the downstream transmission time into first time intervals during which data is transmitted at the high bit rate, the first time intervals alternating with second time intervals which are reserved for the transmission of data at the lower bit rate, or by transmitting data both at the high and the low bit rate concurrently. For this reason, the PON 1 shown in Fig. 1 is also referred to as a multi-mode network, more particularly a dual-mode network.

In such a multi-mode PON, the legacy ONTs are usually not capable to recover the clock from the binary signal transmitted with the higher bit rate. Consequently, the OLT must provide a downstream signal which allows the legacy ONTs to perform their clock recovery even during time intervals when data at the higher bit rate is transmitted. One advantageous way to generate such a downstream signal is to use a so-called bit-stacked signal which is generated by superimposing, i.e. adding up the amplitude of two discrete-level signals, in particular binary signals, one with the lower and the other with the higher bit rate, the phase of both signals being aligned, preferably being identical. The speed of the discrete-level signals refers to the speed at which transitions between the discrete levels occur. In case that the discrete-level signals are binary signals, i.e. signals with only two discrete levels, the speed of the signal corresponds to the bit rate. When more than two discrete levels are contained in the discrete-level signals, more than one bit may be transmitted between subsequent transitions, so that in this case, the bit rate may be larger than the signal speed, the signal speed corresponding to the symbol rate / symbol frequency in this case.

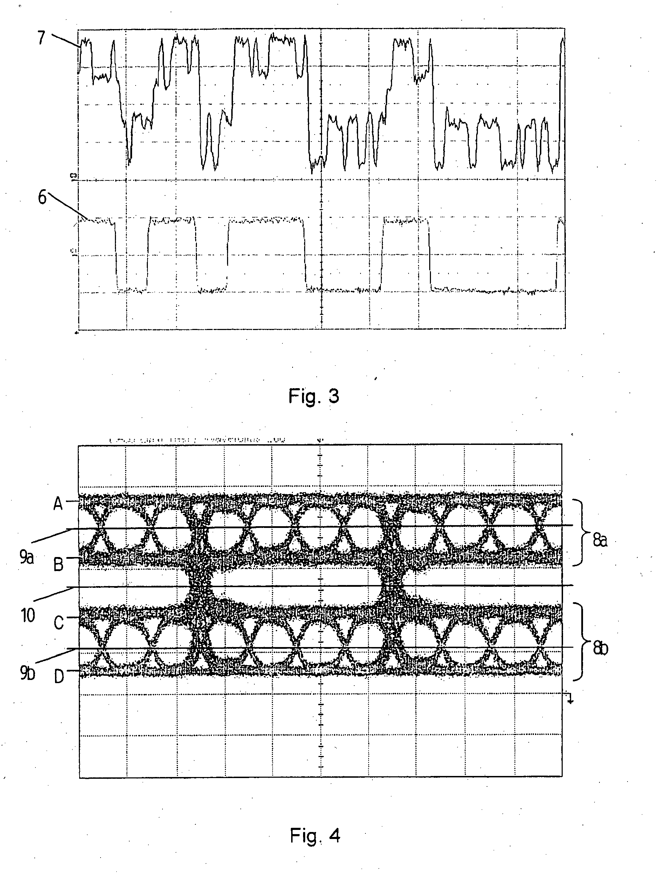

The time waveforms of a dual-speed, multi-level signal **7** resulting from this superposition during a time interval in which both high- and low-speed transmission is performed is shown in **Fig. 3** together with the time waveform of a binary signal **6** with the lower bit rate. The binary signal with the higher bit rate may be derived from Fig. 3 by subtracting the binary signal 6 from the multi-level signal 7. With the dual-speed, multi-level signal 7, concurrent data transmission and recovery using both speeds is possible in suitable constellations.

The advantage of the use of the bit-stacked signal 7 in the downstream transmission is that the clock recovery of the legacy ONTs may still recover the clock of the binary signal 6 with the lower bit rate from the multi-level signal 7, while at the same time the updated ONTs may recover the clock and extract the binary signal with the higher bit rate from the multi-level signal 7.

A clock recovery process for the dual-speed, multi-level signal 7 is best described with reference to **Fig. 4**, which shows an eye diagram representing the transitions between the amplitude levels of a multitude of multi-level signals of the type shown in Fig. 3. In the eye diagram, four equidistant amplitude levels **A** to **D** are shown. The second binary signal is represented in Fig. 4 by a first sub-eye pattern **8a** of transitions between the first amplitude level A and the second amplitude level B, as well as by a second sub-eye pattern **8b** with transitions between the third amplitude level C and the fourth amplitude level D. The first binary signal induces transitions from the first and second levels A, B to the third and fourth levels C, D at a bit rate which is four times smaller than the bit rate of the transitions of the second binary signal 8a, 8b.

Recovery of the clock of the second binary signal 8a, 8b from the multi-level signal 7 is typically performed by setting a first slicing level **9a** of the clock recovery in-between the first and second amplitude levels A, B and/or by setting a second slicing level **9b** in between the third and fourth amplitude levels C, D. A slicing level is the amplitude level which is used by the clock recovery to mark the state transitions of the signal which are then synchronized with the signal of a local oscillator or its fundamental frequency component is extracted.

An oscillator which generates the second bit rate is then synchronized to the part of the second binary signal which is present in the first or the second sub-eye pattern 8a, 8b. As only about half of the transitions of the second binary signal are present in the first sub-eye pattern 8a, whereas the other half of the of the transitions is present in the second sub-eye pattern 8b, two transition detectors and a combiner or even two clock recovery circuits may be required for recovering the clock in order to better follow the jitter in the bit-stacked signal. Moreover, as the transitions in the sub-eye patterns 8a, 8b are only present during time intervals in which transmission is performed at the high bit rate, the clock recovery may suffer from edge distortions when evaluating the downstream signal during time periods in which only the binary signal with the lower bit rate is transmitted and slicing levels are not central anymore with respect to the eye-pattern.

### Object of the Invention

It is the object of the invention to provide: an optical network termination, a passive optical network with at least one such optical network termination, as well as a method for recovering a multi-speed, multi-level signal and a computer program product for performing the method, all of which allow a simple and cost-effective way to recover the clock of a high-speed, discrete-level signal from a multi-speed, multi-level signal.

### Summary of the Invention

This object is achieved by an optical network termination with a clock recovery circuit which is adapted to recover the clock of the second discrete-level signal from the first discrete-level signal of the multi-speed, multi-level signal, by synchronizing a local oscillator, generating the second speed to the first discrete-level signal. The clocks of the first and second discrete-level signals are phase-aligned. The special, phase-aligned structure of the multi-speed, multi-level signal allows basing the clock recovery of the second discrete-level signal on the first discrete-level signal, i.e. the discrete-level signal with the lower speed. The inventors found that the recovery of the clock of the discrete-level signal with the high speed may be performed by synchronizing the local oscillator of commercially available clock recovery circuits designed for the higher speed to the discrete-level signal with the lower speed. In such a way, the clock of the high-speed signal can be recovered in a simple way also during time intervals in which only the binary signal with the lower speed is transmitted, thus allowing to recover the clock with a higher update rate.

In a preferred embodiment the advanced ONT further comprises a data recovery unit for extracting the second discrete-level signal from the multi-speed, multi-level signal using the recovered clock. The extraction of the second discrete-level signal may be performed by using two decision thresholds, a first one being located between the first and second amplitude levels A, B of the eye diagram of Fig. 3, the second one being located between the third and fourth amplitude levels C, D. The recovered clock signal is used to control the time instance when the amplitude decision is taken. It is understood that the clock recovery circuit and the data recovery circuit are not necessarily separate physical entities and that a clock data recovery circuit may be used for combining both functions.

In another preferred embodiment the clock recovery circuit is adapted to recover the clock of the second discrete-level signal from the first discrete-level signal by using an average amplitude of the multi-speed, multi-level signal as a slicing level. Although the person skilled in the art will appreciate that in principle, almost any amplitude which is located between the seconds and third amplitude levels B, C of Fig. 3 may be used as a slicing level for recovering the clock of the second binary signal from the first binary signal, when the average amplitude level is used no threshold level adjustment requiring an offset voltage is needed, such that a standard clock recovery circuit which may be AC-coupled can be used for recovering the binary signal with the higher bit rate.

A further aspect of the invention is realized in a passive optical network, comprising: an optical line termination adapted to generate a multi-speed, multi-level signal by summing up a first discrete-level signal having a first speed and a second discrete-level signal having a second speed, the second speed being an integer multiple of the first speed, the clocks of the first and second discrete-level signal being phase-aligned, and at least one optical network termination as described above. The PON of the type described above is a multi-mode PON with an OLT which is adapted to generate the multi-speed, multi-level signal described above during time intervals in which transmission of downstream signals should be performed at the high bit rate. In time intervals in which transmission only at the low speed is performed, only the discrete-level signal with the first speed is transmitted by the OLT in downstream. Alternatively, permanent transmission of a multi-level signal transmitting data at different speeds is possible. Typically, addition of the discrete-level signals is performed in the electrical domain within the OLT, the voltage levels of the discrete-level signals being summed up.

In a preferred embodiment, the passive optical network comprises at least one further optical network termination, comprising: a further clock recovery circuit which is adapted to recover the clock of the first discrete-level signal from the multi-speed, multi-level signal, preferably by synchronizing a local oscillator for generating the first speed to the first binary signal, and a further data recovery unit for extracting the first discrete-level signal from the multi-speed, multi-level signal using the recovered clock. The further ONT described above is a legacy ONT which is enabled to synchronize its local oscillator to the downstream signal also in time segments in which high-speed transmission is performed.

A further aspect of the invention is implemented in a method for receiving a multi-speed, multi-level signal comprising a first discrete-level signal with a first speed and a second discrete-level signal with a second speed, the second speed being an integer multiple of the first speed, the clocks of the first and second discrete-level signals being phase-aligned, comprising: recovering the clock of the second discrete-level signal from the first discrete-level signal of the multi-level signal, preferably by synchronizing a local oscillator for the second speed to the first discrete-level signal. As has already been described above, by performing such a method, a standard clock recovery circuit may be used for recovering the second discrete-level signal speed from the multi-level signal.

In a preferred variant, the method further comprises: recovering the clock of the second discrete-level signal from the first discrete-level signal by using an average amplitude of the multi-level signal as a slicing level, thus allowing to use a standard clock recovery circuit without having to make adjustments, as in such circuits, a slicing level is usually set at the average signal level.

In another preferred variant the second speed is chosen to be four times of the first speed. When recovering the clock of the second discrete-level signal from the first discrete-level signal, the ratio between the higher speed and the lower speed should not be exceedingly large, as otherwise it will be difficult for the local oscillator to exactly reproduce the clock phase of the binary signal with the high speed. Therefore, the higher speed should not be chosen to be more than two orders of magnitude larger than the lower speed.

Preferably, the method further comprises: generating a first discrete-level signal having a periodic bit pattern, the periodic bit pattern preferably consisting of a low level bit alternating with a high level bit. The quality of the clock recovery can be enhanced when a first discrete-level signal with a periodic bit pattern is used, as continuous information on the phase error is generated in this case in the clock recovery. The highest state transition density can be generated when a binary signal with a repetitive "10" bit pattern is used, which results in a high update rate of the clock recovery edge/error detector, thus allowing to follow jitter in the bit-stacked signal more easily and to keep the phase error low.

A final aspect of the invention is implemented in a computer program product comprising code means adapted to perform all the steps of the method described above. The computer program product may be implemented in a suitable hardware, in particular a field programmable gate array (FPGA) or an application-specific integrated circuit (ASIC), as the operations required for the clock recovery are time critical.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: a schematic diagram of an embodiment of a multi-mode PON,
- **Figs. 2a,b**: (a) a legacy optical network termination and (b) an embodiment of an advanced optical network termination,
- **Fig. 3**: a multi-level signal waveform and a binary signal waveform used in downstream transmission in the passive optical network of Fig. 1, and
- **Fig. 4**: an eye pattern of the multi-level signal of Fig. 3.

### Detailed Description of Preferred Embodiments

In the following, the recovery of the clock and the extraction of the first and of the second binary signal from the dual-speed, multi-mode signal transmitted to the legacy receiver 2.1 and the advanced receiver 3 of Fig. 1 will be described with reference to **Figs. 2a****,b.**

The legacy ONT 2.1 shown in Fig. 2a comprises a photodiode **11** with typically a limiting transimpedance amplifier as an optical/electrical converter for performing an optical/electrical conversion of the multi-level signal 7 which has been transmitted as an optical signal through the fiber links of the PON 1 of Fig. 1. A limiting post-amplifier **13** is used to amplify the received signal before it is fed to a data recovery circuit **14.** A tap is used to extract part of the amplified multi-mode signal for feeding it to a clock recovery circuit **15** which is adapted to recover the clock of binary signals. For this purpose, a local oscillator **16** of the clock recovery circuit 15 is controlled such that its frequency corresponds to the bit rate of 2.5 Gbit/s of the first binary signal and is synchronized to the first binary signal.

The slicing level of the clock recovery circuit 15 is set to the average amplitude level **10** of the multi-level signal shown in Fig. 4 which corresponds to the typical setting of commercially available clock recovery circuits for binary signals. A clock signal **17** generated by the clock recovery circuit 15 is then fed to a flip-flop **18** which is used as a hard-decision device for extracting the first binary signal 6 from the multi-level signal 7, the clock signal 7 defining the position within each bit slot at which the amplitude decision should be made. A threshold control **19** sets the decision threshold of the flip-flop 18 to a value which essentially corresponds to the average amplitude 10 at which the slicing level of the clock recovery circuit 15 has been set. In such a way, the binary signal 6 is reproduced at an output of the data recovery circuit 14 and can be used for further processing.

The legacy ONT 2.1 of Fig. 2a is only prepared to extract the first binary signal 6 from the multi-level signal 7. For recovering a second signal **8** having a bit rate of 10 Gbit/s from the dual-speed multi-level signal, several modifications have to be made to the legacy ONT 2.1, as can be seen in Fig. 2b which represents one of the advanced ONTs 3 of the PON 1 of Fig. 1.

In the receiving chain of the advanced **ONT 3,** the o/e-converter 11 and the pre- and post-amplifiers 12, 13 correspond essentially to the ones of the legacy ONT shown in Fig. 2a, the only difference being that the amplifiers 12, 13 are linear (non-limiting) devices and adapted for amplifying signals with a bit rate of 10 Gbit/s by virtue of their bandwidth. For extracting the second signal 8 from the multi-level signal 7, the data recovery circuit 14a of the advanced ONT 3 comprises a splitter **20** which feeds equal parts of the multi-level signal 7 to two parallel flip-flops **18a, 18b,** the decision thresholds of which are usually set to the amplitude levels 9a, 9b shown in Fig. 4 by the threshold control 19. In some cases, an offset voltage for slightly shifting the slicing levels from the positions shown in Fig. 4 may be advantageous in order to take an asymmetry in the signal-dependent noise power of the high-level states and the low-level states due to the optical transmission of the multi-level signal through the fibers of the PON into account. In any case, the bit streams produced by the flip-flops 18a, 18b are then combined in a data combiner **21** which may be devised as a multiplexer for reproducing the second binary signal 8 at the output of the data recovery circuit 14a.

The data recovery circuit 14a of the advanced ONT 3 further comprises a conventional clock recovery circuit 15 for feeding clock signals **17a, 17b** to the flip-flops 18a, 18b. The only difference between the clock recovery circuit 15 of Fig. 2b to the one shown in Fig. 2a is that the local oscillator **16a** is adapted to generate the clock signal of the higher bit rate, i.e. 10 GHz. Nevertheless, the slicing level of the clock recovery circuit 15 is still fixed at the average amplitude 10 of the multi-level signal 7, the reason being as follows: As the first and second digital signals 6, 8 are generated with constant (typically identical) phase, the clocks of the first and second binary signals are precisely phase aligned. Therefore, by synchronizing the local oscillator 16a of the clock recovery circuit 15 to the first binary signal 7, the clock, i.e. the frequency and phase, of the second binary signal 8 can be recovered. In such a way, a standard binary clock recovery circuit 15 can be used for recovering the clock of the second binary signal 8 from the four-level dual-speed signal 7 without any modification.

For the purpose of optimizing the clock recovery of the advanced ONT 3, using a first binary signal 7 which produces a periodic bit sequence with a high density of transitions at the slicing level 10 is advantageous. Such a signal can be produced by generating a first binary signal with a periodic bit sequence in the OLT 4, in particular a sequence with a space bit alternating with a mark bit: 10101010 etc. In such a way, a high update rate of the clock recovery phase error detector may be produced and jitter in the multi-level signal can be more easily followed. It is understood that when a first binary signal with a periodic bit pattern is chosen, no viable information can be transmitted to the legacy ONTs/ONUs 2.1, 2.2 of Fig. 1 during this time interval. However, in typical downstream transmissions, no data for the legacy ONTs 2.1, 2.2 is sent in those time intervals during which the multi-level signal is transmitted to the advanced ONTs 3. Consequently, using a specific shape for the bit pattern of the first binary signal during those time intervals does not unduly impair the capacity of the system. However, the person skilled in the art will appreciate that the clock recovery as described above is still possible with a multi-level signal 7 in which viable information is contained both in the low-speed and in the high-speed binary signal.

Although the description above has been given for a dual-speed, multi-level signal comprising two binary signals, the person skilled in the art will appreciate that applying the clock recovery described above to multi-speed, multi-level signals comprising three or more discrete-level digital signals is a straightforward modification of the concepts described herein.

In summary, by recovering the clock of the second binary signal from the first binary signal, it is possible to use a conventional clock recovery circuit without further adjustments, leading to a considerable cost reduction as compared to recovering the clock of the second binary signal from the peripheral sub-eyes 8a, 8b shown in Fig. 4. Moreover, continuous edges in the signal are provided for the 2.5/10 Gbit/s operation mode, whereas the clock recovery from the peripheral sub-eyes 8a, 8b would suffer from edge distortions when being evaluated in intervals in which only a 2.5 Gbit/s signal is transmitted.

The above description of preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the scope of the invention, as defined by the appended claims.

## Claims

1. Optical network termination (3) for receiving a multi-speed, multi-level signal (7) comprising a first discrete-level signal (6) having a first speed and a second discrete-level signal (8a, 8b; 8) having a second speed, the second speed being an integer multiple of the first speed, the optical network termination (3) comprising:
a clock recovery circuit (15) adapted to recover the clock of the second discrete-level signal (8a, 8b; 8) from the multi-speed, multi-level signal (7),
**characterized in that**
the clocks of the first and second discrete-level signals (6, 8a, 8b; 8) are phase-aligned and the clock recovery circuit (15) is adapted to recover the clock of the second discrete-level signal (8a, 8b; 8) from the first discrete-level signal (6) of the multi-speed, multi-level signal (7) by synchronizing a local oscillator (16a), which generates the second speed, to the first discrete-level signal (6).

2. Optical network termination according to claim 1, further comprising a data recovery unit (14a) for extracting the second discrete-level signal (8) from the multi-speed, multi-level signal (7) using the recovered clock.

3. Optical network termination according to claim 1, wherein the clock recovery circuit (15) is adapted to recover the clock of the second discrete-level signal (8a, 8b; 8) from the first discrete-level signal (6) by using an average amplitude (10) of the multi-speed, multi-level signal (7) as a slicing level.

4. Passive optical network (1), comprising:
an optical line termination (4) adapted to generate a multi-speed, multi-level signal (7) by summing up a first discrete-level signal (6) having a first speed and a second discrete-level signal (8a, 8b; 8) having a second speed, the second speed being an integer multiple of the first speed, the clocks of the first and second discrete-level signals (6, 8a, 8b; 8) being phase-aligned, and
at least one optical network termination (3) according to claim 1.

5. Passive optical network (1) according to claim 4, comprising at least one further optical network termination (2.1, 2.2), comprising:
a further clock recovery circuit (15) which is adapted to recover the clock of the first discrete-level signal (6) from the multi-speed, multi-level signal (7) by synchronizing a local oscillator (16) generating the first speed to the first discrete-level signal (6), and
a further data recovery unit (14) for extracting the first discrete-level signal (6) from the multi-speed, multi-level signal (7) using the recovered clock.

6. Method for receiving a multi-speed, multi-level signal (7) comprising a first discrete-level signal (6) with a first speed and a second discrete-level signal (8a, 8b; 8) with a second speed, the second speed being an integer multiple of the first speed, **characterized in that** the clocks of the first and second discrete-level signals (6, 8a, 8b; 8) are phase-aligned and the method comprises:
recovering the clock of the second discrete-level signal (8a, 8b; 8) from the first discrete-level signal (6) of the multi-speed, multi-level signal (7) by synchronizing a local oscillator (16a), which generates the second speed, to the first discrete-level signal (6).

7. Method according to claim 6, further comprising:
recovering the clock of the second discrete-level signal (8a, 8b; 8) from the first discrete-level signal (6) by using an average amplitude of the multi-speed, multi-level signal (7) as a slicing level.

8. Method according to claim 6, wherein the second speed is chosen to be four times larger than the first speed.

9. Method according to claim 6, further comprising:
generating a first discrete-level signal (6) having a periodic bit pattern, the periodic bit pattern preferably consisting of a low level bit alternating with a high level bit.

10. A computer program product comprising code means adapted to perform all the steps of the method according to claim 6.

## Patentansprüche

1. Optischer Netzwerkabschluss (3) für den Empfang eines Signals (7) mit mehreren Geschwindigkeiten und mehreren Pegeln, welches ein erstes pegeldiskretes Signal (6) mit einer ersten Geschwindigkeit und ein zweites pegeldiskretes Signal (8a, 8b; 8) mit einer zweiten Geschwindigkeit umfasst, wobei die zweite Geschwindigkeit ein ganzzahliges Vielfaches der ersten Geschwindigkeit ist, wobei der optische Netzwerkabschluss (3) umfasst:
Eine Taktrückgewinnungsschaltung (15), welche dazu ausgelegt ist, den Takt des zweiten pegeldiskreten Signals (8a, 8b; 8) aus dem Signal (7) mit mehreren Geschwindigkeiten und mehreren Pegeln rückzugewinnen,
**dadurch gekennzeichnet, dass**
die Takte des ersten und des zweiten pegeldiskreten Signals (6, 8a, 8b; 8) phasenabgeglichen sind und die Taktrückgewinnungsschaltung (15) dazu ausgelegt ist, den Takt des zweiten pegeldiskreten Signals (8a, 8b; 8) durch Synchronisieren eines lokalen Oszillators (16a), welcher die zweite Geschwindigkeit erzeugt, mit dem ersten pegeldiskreten Signal (6) aus dem ersten pegeldiskreten Signal (6) des Signals mit mehreren Geschwindigkeiten und mehreren Pegeln (7) rückzugewinnen.

2. Optischer Netzwerkabschluss nach Anspruch 1, weiterhin umfassend eine Datenrückgewinnungseinheit (14a) zum Extrahieren des zweiten pegeldiskreten Signals (8) aus dem Signal mit mehreren Geschwindigkeiten und mehreren Pegeln (7) unter Verwendung des rückgewonnenen Taktes.

3. Optischer Netzwerkabschluss nach Anspruch 1, wobei die Taktrückgewinnungsschaltung (15) für die Rückgewinnung des Taktes des zweiten pegeldiskreten Signals (8a, 8b; 8) aus dem ersten pegeldiskreten Signal (6) unter Verwendung einer gemittelten Amplitude (10) des Signals mit mehreren Geschwindigkeiten und mehreren Pegeln (7) als ein Slicing-Pegel ausgelegt ist.

4. Passives optisches Netzwerk (1), umfassend:
Einen optischen Leitungsabschluss (4), welcher für das Erzeugen eines Signals mit mehreren Geschwindigkeiten und mehreren Pegeln (7) durch Aufsummierten eines ersten pegeldiskreten Signals (6) mit einer ersten Geschwindigkeit und eines zweiten pegeldiskreten Signals (8a, 8b; 8) mit einer zweiten Geschwindigkeit ausgelegt ist, wobei die zweite Geschwindigkeit ein ganzzahliges Vielfaches der ersten Geschwindigkeit ist, wobei die Takte des ersten und des zweiten pegeldiskreten Signals (6, 8a, 8b; 8) phasenabgeglichen sind, und
mindestens einen optischen Netzwerkabschluss (3) gemäß Anspruch 1.

5. Passives optisches Netzwerk (1) nach Anspruch 4, mit mindestens einem weiteren optischen Netzwerkabschluss (2.1, 2.2), umfassend:
Eine weitere Taktrückgewinnungsschaltung (15), weiche dazu ausgelegt ist, den Takt des ersten pegeldiskreten Signals (6) durch Synchronisieren eines lokalen Oszillators (16), welcher die erste Geschwindigkeit erzeugt, mit dem ersten pegeldiskreten Signal (6) des Signals mit mehreren Geschwindigkeiten und mehreren Pegeln (7) rückzugewinnen, und
eine weitere Datenrückgewinnungseinheit (14) zum Extrahieren des ersten pegeldiskreten Signals (6) aus dem Signal mit mehreren Geschwindigkeiten und mehreren Pegeln (7) unter Verwendung des rückgewonnenen Taktes.

6. Verfahren zum Empfangen eines Signals (7) mit mehreren Geschwindigkeiten und mehreren Pegeln, welches ein erstes pegeldiskretes Signal (6) mit einer ersten Geschwindigkeit und ein zweites pegeldiskretes Signal (8a, 8b; 8) mit einer zweiten Geschwindigkeit umfasst, wobei die zweite Geschwindigkeit ein ganzzahliges Vielfaches der ersten Geschwindigkeit ist, **dadurch gekennzeichnet, dass** die Takte des ersten und des zweiten pegeldiskreten Signals (6, 8a, 8b; 8) phasenabgeglichen sind, und wobei das Verfahren umfasst:
Rückgewinnen des Taktes des zweiten pegeldiskreten Signals (8a, 8b; 8) aus dem ersten pegeldiskreten Signal (6) des Signals (7) mit mehreren Geschwindigkeiten und mehreren Pegeln durch Synchronisieren eines lokalen Oszillators (16a), welcher die zweite Geschwindigkeit erzeugt, mit dem ersten pegeldiskreten Signals (6).

7. Vorfahren nach Anspruch 6, weiterhin umfassend:
Rückgewinnen des Taktes des zweiten pegeldiskreten Signals (8a, 8b; 8) aus dem ersten pegeldiskreten Signal (6) unter Verwendung einer gemittelten Amplitude des Signals (7) mit mehreren Geschwindigkeiten und mehreren Pegeln als ein Slicing-Pegel.

8. Verfahren nach Anspruch 6, wobei die zweite Geschwindigkeit derart gewählt wird, dass sie ein Vierfaches der ersten Geschwindigkeit ist.

9. Verfahren nach Anspruch 6, weiterhin umfassend:
Erzeugen eines ersten pegeldiskreten Signals (6) mit einem periodischen Bitmuster, wobei das periodische Bitmuster vorzugsweise abwechselnd aus einem Bit mit niedrigem Pegel und einem Bit mit hohem Pegel besteht.

10. Computerprogramm-Produkt, umfassend Codemittel, welche fähig sind, alle Schritte des Verfahrens gemäß Anspruch 6 durchzuführen.

## Revendications

1. Terminaison de réseau optique (3) pour recevoir un signal multi-vitesses, multi-niveaux (7) comprenant un premier signal de niveau discret (6) ayant une première vitesse et un deuxième signal de niveau discret (8a, 8b ; 8) ayant une deuxième vitesse, la deuxième vitesse étant un multiple entier de la première vitesse, la terminaison de réseau optique (3) comprenant :
un circuit de récupération d'horloge (15) adapté pour récupérer l'horloge du deuxième signal de niveau discret (8a, 8b ; 8) à partir du signal multi-vitesses, multi-niveaux (7),
**caractérisée en ce que**
les horloges des premier et deuxième signaux de niveau discret (6, 8a, 8b ; 8) sont alignées en phase et le circuit de récupération d'horloge (15) est adapté pour récupérer l'horloge du deuxième signal de niveau discret (8a, 8b ; 8) à partir du premier signal de niveau discret (6) du signal multi-vitesses, multi-niveaux (7) en synchronisant un oscillateur local (16a), qui génère la deuxième vitesse, avec le premier signal de niveau discret (6).

2. Terminaison de réseau optique selon la revendication 1, comprenant en outre une unité de récupération de données (14a) pour extraire le deuxième de niveau discret (8) à partir du signal multi-vitesses, multi-niveaux (7) en utilisant l'horloge récupérée.

3. Terminaison de réseau optique selon la revendication 1, dans lequel le circuit de récupération d'horloge (15) est adapté pour récupérer l'horloge du deuxième signal de niveau discret (8a, 8b ; 8) à partir du premier signal de niveau discret (6) en utilisant une amplitude moyenne (10) du signal multi-vitesses, multi-niveaux (7) comme niveau de découpage.

4. Réseau optique passif (1), comprenant :
une terminaison de ligne optique (4) adaptée pour générer un signal multi-vitesses, multi-niveaux (7) en additionnant un premier signal de niveau discret (6) ayant une première vitesse et un deuxième signal de niveau discret (8a, 8b ; 8) ayant une deuxième vitesse, la deuxième vitesse étant un multiple entier de la première vitesse, les horloges des premier et deuxième signaux de niveau discret (6, 8a, 8b ; 8) étant alignées en phase, et
au moins une terminaison de réseau optique (3) selon la revendication 1.

5. Réseau optique passif (1) selon la revendication 4, comprenant au moins une autre terminaison de réseau optique (2.1, 2.2), comprenant :
un autre circuit de récupération d'horloge (15) qui est adapté pour récupérer l'horloge du premier signal de niveau discret (6) à partir du signal multi-vitesses, multi-niveaux (7) en synchronisant un oscillateur local (16) générant la première vitesse avec le premier signal de niveau discret (6), et
une autre unité de récupération de données (14) pour extraire le premier signal de niveau discret (6) à partir du signal multi-vitesses, multi-niveaux (7) en utilisant l'horloge récupérée.

6. Procédé pour recevoir un signal multi-vitesses, multi-niveaux (7) comprenant un premier signal de niveau discret (6) ayant une première vitesse et un deuxième signal de niveau discret (8a, 8b ; 8) ayant une deuxième vitesse, la deuxième vitesse étant un multiple entier de la première vitesse, **caractérisé en ce que** les horloges des premier et deuxième signaux de niveau discret (6, 8a, 8b ; 8) sont alignées en phase, et le procédé comprend l'étape suivante :
récupérer l'horloge du deuxième signal de niveau discret (8a, 8b ; 8) à partir du premier signal de niveau discret (6) du signal multi-vitesses, multi-niveaux (7) en synchronisant un oscillateur local (16a), qui génère la deuxième vitesse, avec le premier signal de niveau discret (6).

7. Procédé selon la revendication 6, comprenant en outre l'étape suivante :
récupérer l'horloge du deuxième signal de niveau discret (8a, 8b ; 8) à partir du premier signal de niveau discret (6) en utilisant une amplitude moyenne du signal multi-vitesses, multi-niveaux (7) comme niveau de découpage.

8. Procédé selon la revendication 6, dans lequel la deuxième vitesse est choisie comme étant quatre fois supérieure à la première vitesse.

9. Procédé selon la revendication 6, comprenant en outre l'étape suivante :
générer un premier signal de niveau discret (6) ayant une configuration binaire périodique, la configuration binaire périodique étant de préférence constituée d'un bit de niveau bas alternant avec un bit de niveau haut.

10. Produit de programme informatique comprenant des moyens de code adaptés pour exécuter toutes les étapes du procédé selon la revendication 6.
